(19) Europäisches Patentamt
European Patent Office
Office européen des brevets

(11) Veröffentlichungsnummer: **0 026 835**
**A1**

(12) **EUROPÄISCHE PATENTANMELDUNG**

(21) Anmeldenummer: **80105074.1**

(22) Anmeldetag: **27.08.80**

(51) Int. Cl.³: **C 07 F 7/18**, C 07 F 7/10, C 07 F 7/08

(30) Priorität: **01.09.79 DE 2935454**

(43) Veröffentlichungstag der Anmeldung: **15.04.81**
**Patentblatt 81/15**

(84) Benannte Vertragsstaaten: **BE FR GB IT NL**

(71) Anmelder: **Degussa Aktiengesellschaft, Degussa AG**
**Fachbereich Patente Rodenbacher**
**Chaussee 4 Postfach 1345, D-6450 Hanau 1 (Stadtteil Wolfgang) (DE)**

(72) Erfinder: **Buder, Wolfgang, Dr., Dipl.-Chem., In der Gartel 1, D-6458 Rodenbach (DE)**
Erfinder: **Wolff, Siegfried, Dipl.-Chem., Weiherstrasse 28, D-5303 Bornheim-Merten (DE)**
Erfinder: **Kleinschmit, Peter, Dr., Greifenhagenstrasse 10, D-6450 Hanau (DE)**

(54) **Stickstoffhaltige Alkoxysilane und Verfahren zu ihrer Herstellung.**

(57) Beansprucht werden stickstoffhaltige Alkoxysilane der Formel

$$(RO)_{3-n}(CH_3)_nSi(CH_2)_mNHCON_3,$$

in der bedeuten R eine Alkylgruppe mit 1 bis 3 Kohlenstoffatomen, n = 0, 1 oder 2 und m = 1, 2 oder 3, und das Verfahren zur Herstellung der genannten stickstoffhaltigen Alkoxysilane, welches dadurch gekennzeichnet ist, daß man ein in einem inerten Lösungsmittel gelöstes, eine Isocyanatgruppe aufweisendes Silan der Formel

$$(RO)_{3-n}(CH_3)_nSi(CH_2)_mN{=}C{=}O,$$

in der R, n und m die angegebenen Bedeutungen haben, mit wasserfreier Stickstoffwasserstoffsäure oder mit Halogenwasserstoff und Alkalimetall-, Erdalkalimetall- oder Ammoniumazid bei Temperaturen zwischen 0° C und dem Siedepunkt des inerten Lösungsmittels umsetzt.

EP 0 026 835 A1

Die Erfindung betrifft neue Stickstoff enthaltende Alkoxysilane und ihre Herstellung.

Bekannt sind Isocyanatgruppen enthaltende Organosiliciumverbindungen verschiedener Struktur. So kann z.B. 3-Trimethoxysilylpropylisocyanat $(CH_3O)_3SiC_3H_6NCO$ nach A. Berger (US-PS 3 821 218) oder Diäthoxymethylsilylmethylisocyanat $(C_2H_5O)_2CH_3SiCH_2NCO$ nach V.P. Kozynkov (Zh. Obshch. Khim. 1968, 38(5), 1179-85) hergestellt werden.

Ferner sind Silane bekannt, die Arylsulfonylazidgruppen aufweisen. So kann z.B. Trimethoxysilylamylsulfonylazid oder Trimethoxysilylcyclohexylsulfonylazid nach J.B. Thomson (US-PS 3 697 551) hergestellt werden.

Weiterhin sind Organosiliciumverbindungen bekannt, die Azidoformiatgruppen der Formel $-OCON_3$ aufweisen, wie z.B. Trimethoxysilyläthylazidoformiat, Triäthoxysilylpropylazidoformiat u.s.w. (DE-OS 21 65 198). Die Azidoformiate können durch Umsetzung eines Chlorformiats mit einem Ueberschuss an Alkaliazid hergestellt werden (siehe auch US-PS 3 284 421).

Die erfindungsgemässen Silylalkylcarbamidazide der Formel $(RO)_{3-n}(CH_3)_nSi(CH_2)_mNHCON_3$ werden gemäss den folgenden zwei Formelgleichungen aus den entsprechenden Isocyanaten, nach an sich bekannten Verfahren (Spectrochimica Acta, Vol. 29 A, 1429 – 1438, 1973) hergestellt.

a) $$(RO)_{3-n}(CH_3)_nSi-(CH_2)_m-N{=}C{=}O \quad + \quad H-N_3 \longrightarrow$$

$$(RO)_{3-n}(CH_3)_nSi-(CH_2)_m-\overset{H}{\overset{|}{N}}-\overset{O}{\overset{\|}{C}}-N_3$$

b) $$(RO)_{3-n}(CH_3)_nSi-(CH_2)_m-N{=}C{=}O \quad + \quad H-X \longrightarrow$$

$$(RO)_{3-n}(CH_3)_nSi-(CH_2)_m-\overset{H}{\underset{|}{N}}-\overset{O}{\underset{\|}{C}}-X \quad + \quad NaN_3 \longrightarrow$$

$$(RO)_{3-n}(CH_3)_nSi-(CH_2)_m-\overset{H}{\underset{|}{N}}-\overset{O}{\underset{\|}{C}}-N_3 \quad + \quad NaCl \quad .$$

Die Bezeichnung X bedeutet Halogen, insbesondere Chlor und Brom. Anstelle des angegebenen Alkalimetalls Natrium kann auch ein anderes Alkalimetall eingesetzt werden wie insbesondere Kalium oder Lithium oder Ammonium. Es kommen auch die Erdalkalimetallsalze wie z.B. Magnesium-, Calcium- und Bariumazid in Frage.

Als Lösungsmittel dienen solche bei Normaltemperaturen flüssige organische Verbindungen, die die Ausgangssubstanzen mindestens teilweise lösen, bei der Reaktion aber nicht mitwirken und vorzugsweise das Nebenprodukt Alkalimetallhalogenid oder dergleichen nicht lösen, damit dieses zweckmässigerweise ausfällt. Solche Lösungsmittel sind insbesondere Aether wie Diäthyläther, Diisopropyläther, Di-n-propyläther, Methyläthyläther, Aethylpropyläther, 1,2-Dimethoxyäthan und dgl.; ferner Chlorkohlenwasserstoffe wie z.B. Methylenchlorid, Dichloräthan, Tetrachlorkohlenstoff und Chloroform. Verwendung finden können aber auch Acetonitril oder andere aprotische Lösungsmittel wie Dimethylsulfoxid, Dimethylformamid oder Ketone wie z.B. Aceton oder Methyläthylketon.

Beispiel 1

In einer Standardapparatur mit Innenthermometer, Rührer und Tropftrichter wurden 1,0 Mol $(CH_3O)_3SiC_3H_6NCO$ (205,3 g; $n_D^{25} = 1,4186$) verdünnt mit 150 ml absolutem Diäthyläther bei $0^\circ$ C vorgelegt. Zu dieser Mischung wurde unter Rühren innerhalb von 30 Minuten 1,05 Mol wasserfreie Stickstoffwasserstoffsäure $HN_3$ (45,2 g in 100 ml Diäthyläther) getropft. Dabei stieg die Temperatur bis zum Rückfluss des Diäthyläthers. Nach Ende

des Zutropfens wurde der Diäthyläther im Vakuum abgezogen. Die verbleibende Flüssigkeit (243,5 g) wurde durch NMR-, IR- und Elementaranalyse als 3-Trimethoxysilylpropylcarbamidazid identifiziert. Die Ausbeute betrug dabei 98,1 %.

Elementaranalyse (in Gewichtsprozent)

| | C | H | N |
|---|---|---|---|
| berechnet: | 33,86 | 6,46 | 22,56 |
| gefunden: | 33,49 | 6,49 | 22,38 |

Brechungsindex: $n_D^{25}$ = 1,4574 .

Abbildung 1: 60 MHz NMR-Spektrum und
Abbildung 2: IR-Spektrum der hergestellten Verbindung.

Beispiel 2

Wie in Beispiel 1 beschrieben, wurde 1,0 Mol $(CH_3O)_3Si-CH_2NCO$ (177,3 g: $n_D^{25}$ = 1,4060) mit 1,05 Mol wasserfreier $HN_3$ (45,2 g) umgesetzt. Die nach Abziehen des Lösungsmittels zurückbleibende Flüssigkeit war nach NMR-, IR- und Elementaranalyse Trimethoxysilylmethylcarbamidazid. Die Ausbeute betrug 214,6 g (97,4 %).

Elementaranalyse (in Gewichtsprozent)

| | C | H | N |
|---|---|---|---|
| berechnet: | 27,27 | 5,49 | 25,43 |
| gefunden: | 26,97 | 5,45 | 25,16 |

Brechungsindex: $n_D^{25}$ = 1,4602 .

Abbildung 3: 60 MHz NMR-Spektrum und
Abbildung 4: IR-Spektrum des hergestellten Silans.

Beispiel 3

In der in Beispiel 1 beschriebenen Apparatur, die jetzt zusätzlich mit einem Gaseinleitungsrohr versehen war, wurde 1,0 Mol $(CH_3O)_3SiC_3H_6NCO$ (205,3 g) verdünnt mit 150 ml 1,2-Dichloräthan vorgelegt. In diese Mischung wurde bei 0° C trockener Chlorwasserstoff eingeleitet bis im IR-Spektrum keine $\nu_{as}NCO$ mehr beobachtet werden konnten, d.h. bis sich das entsprechende Carbamidsäurechlorid vollständig gebildet hatte. In diese Lösung wurden 1,20 Mol getrocknetes pulverisiertes $NaN_3$ (78,0 g) eingetragen und 24 Stunden bei 30° C gerührt. Danach wurde die Lösung durch Filtration vom ausgefallenen NaCl und überschüssigem $NaN_3$ befreit. Nach dem Abziehen des Lösungsmittels blieb 3-Trimethoxysilylpropylcarbamidazid in 92,4 %iger Ausbeute zurück (229,4 g). Der Brechungsindex war $n_D^{25}$ = 1,4575 .

Für die beiden in den Abbildungen 1 und 3 wiedergegebenen 60 MHZ $H^1$-NMR-Spektren, aufgenommen mit einem NMR-Spektrometer Typ EM 360 A der Firma VARIAN Associates, Palo Alto, CA, U.S.A., galten folgende Arbeitsvorschriften: Lösungsmittel $CDCl_3$; Temperatur 37° C; Filter Bandbreite 4 Hz; R.F. Feld 0,05 mG; Registrierzeit 250 s; Registrierbereich 500 Hz; Spektrum Amplitude 10/9 bzw. 10/10. Interner Standard war Tetramethylsilan ($\delta$- Wert = 0). Zur Kurve des NMR-Spektrums gehört die jeweils auch wiedergegebene Integrationskurve. Die Abbildung 1 zeigt das $^1H$-NMR Spektrum des $(CH_3O)_3Si-C_3H_6-NH-CON_3$, dessen Resonanzsignal und deren Intergration der angegebenen Formel eindeutig zugeordnet werden können; das gleiche gilt für $(CH_3O)_3SiCH_2NHCON_3$ und Abbildung 3.

Die IR-Absorptionen der IR-Spektren in Abbildungen 2 und 4 wurden im Bereich 4000 $cm^{-1}$ bis 1400 $cm^{-1}$, nur dieser Bereich ist für die Carbamidazidstruktur aussagekräftig, den entsprechenden Schwingungen zugeordnet. Die IR-Spektren wurden mit einem IR-Gitterspektrographen PE 325 der Firma PERKIN-ELMER aufgenommen.

Die erfindungsgemässen Azidosilane finden u.a. Verwendung als Zwischenprodukte, so z.B. zur Herstellung von Phosphiniminen nach Staudinger (siehe z.B. Helv. Chim. Acta, Band 2, Seite 635 (1919).

PAT/Gr-mi
31.8.79

Patentansprüche

1. Stickstoffhaltige Alkoxysilane der Formel

$$(RO)_{3-n}(CH_3)_nSi(CH_2)_mNHCON_3 ,$$

in der bedeuten R eine Alkylgruppe mit 1 bis 3 Kohlenstoffatomen, n 0, 1 oder 2 und m 1, 2 oder 3.

2. Verfahren zur Herstellung der stickstoffhaltigen Alkoxysilane nach Anspruch 1, dadurch gekennzeichnet, dass man ein in einem inerten Lösungsmittel gelöstes, eine Isocyanatgruppe aufweisendes Silan der Formel

$$(RO)_{3-n}(CH_3)_nSi(CH_2)_mN{=}C{=}O ,$$

in der R, n und m die angegebenen Bedeutungen haben, mit wasserfreier Stickstoffwasserstoffsäure oder mit Halogenwasserstoff und Alkalimetall-, Erdalkalimetall- oder Ammoniumazid bei Temperaturen zwischen 0° C und dem Siedepunkt des inerten Lösungsmittels umsetzt.

BAD ORIGINAL

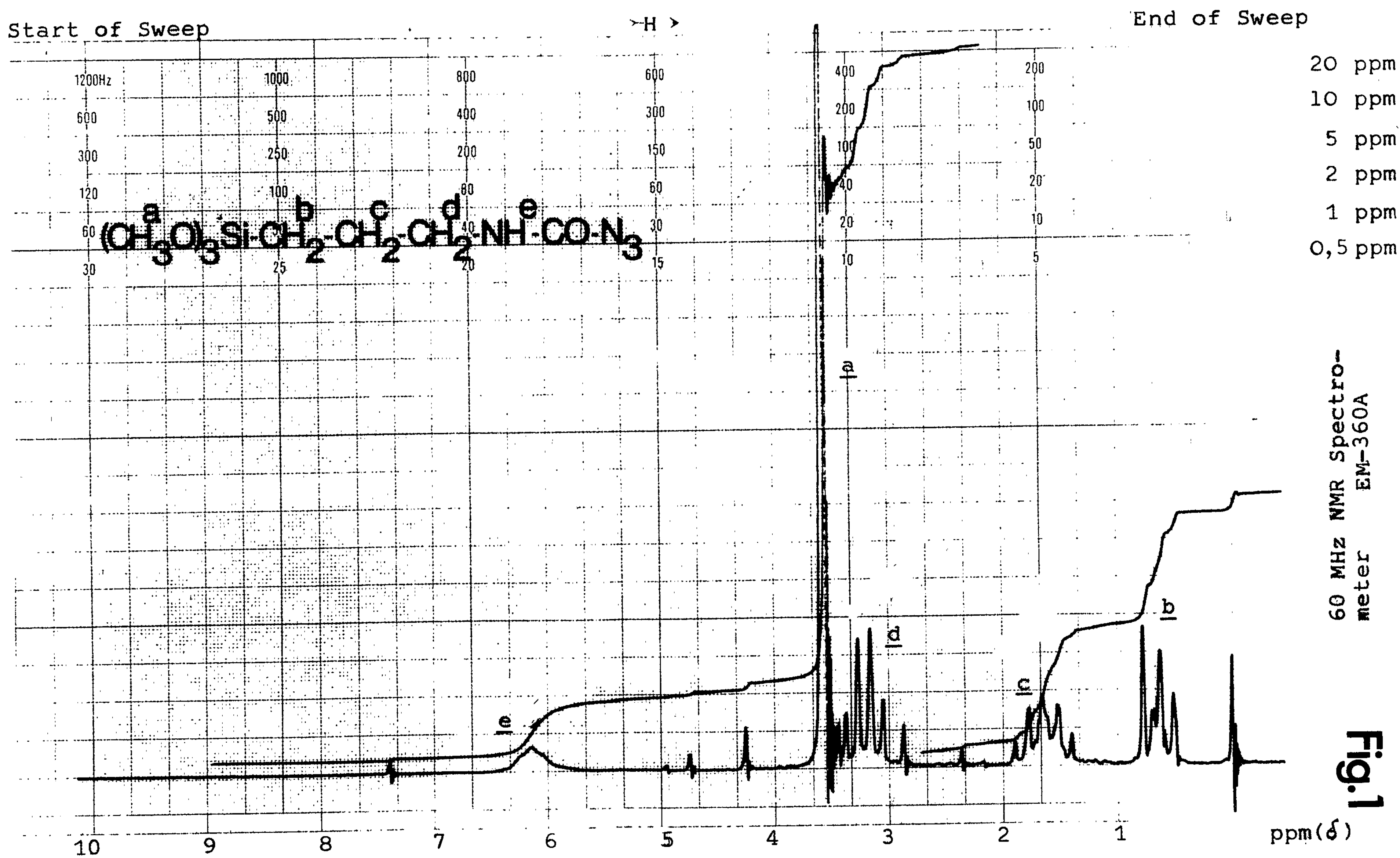
Start of Sweep
End of Sweep
>H >
20 ppm
10 ppm
5 ppm
2 ppm
1 ppm
0,5 ppm
1200Hz
(CH3O)3Si-CH2-CH2-CH2-NH-CO-N3
a
b
c
d
e
60 MHz NMR Spectrometer EM-360A
ppm(δ)
10
9
8
7
6
5
4
3
2
1

Fig.1

2/3

0026835

FIG.2

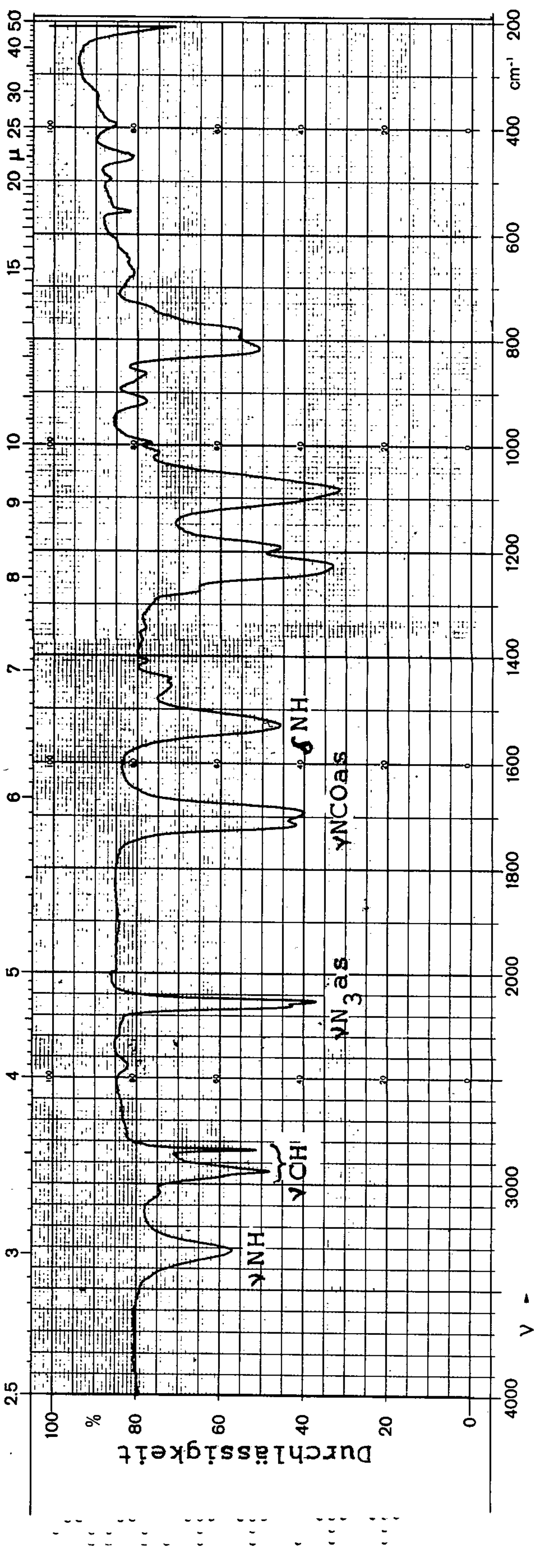


FIG. 4

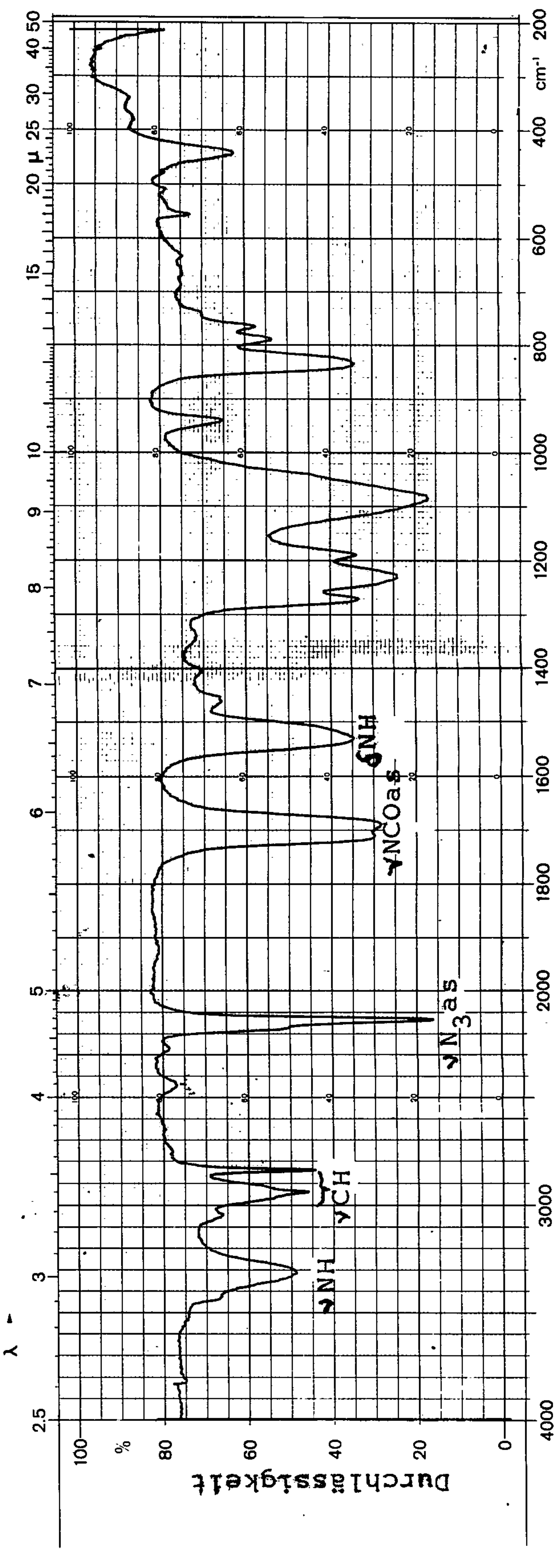

3/3

0026835

Fig.3

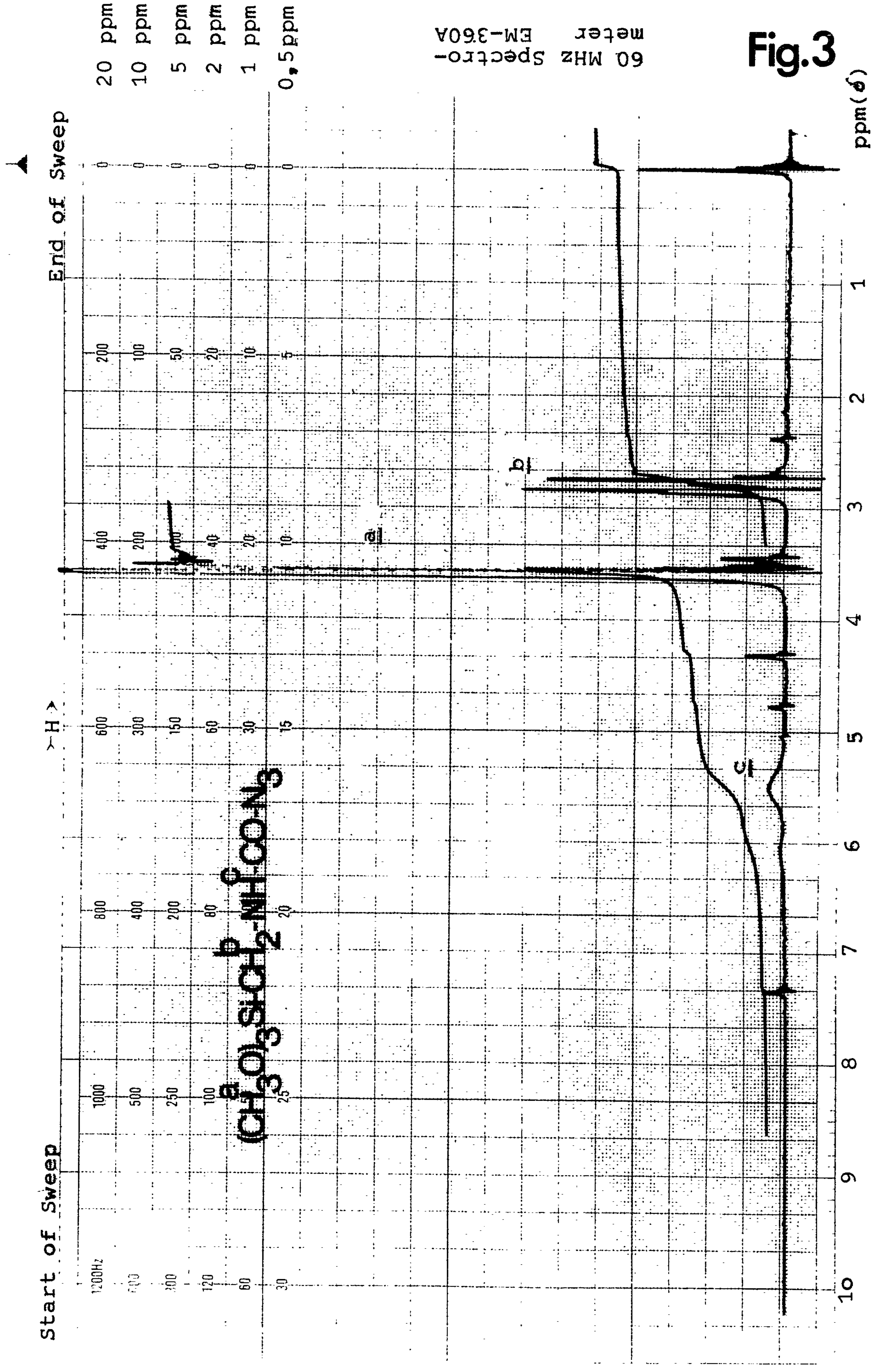

Europäisches Patentamt

# EUROPÄISCHER RECHERCHENBERICHT

0026835
Nummer der Anmeldung
EP 80 10 5074.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,A | US - A - 3 821 218 (BERGER) -- | |
| D,A | US - A - 3 697 551 (THOMSON) -- | |
| D,A | DE - A - 2 165 198 (PPG INDUSTRIES INC.) -- | |
| A | HOUBEN WEYL "Methoden der organischen Chemie" Band X/3, Teil 3, 1965, GEORG THIEME VERLAG, Stuttgart * Seite 789 * ---- | 2 |

KLASSIFIKATION DER ANMELDUNG (Int.Cl.3)

C 07 F 7/18
C 07 F 7/10
C 07 F 7/08

RECHERCHIERTE SACHGEBIETE (Int. Cl.3)

C 07 F 7/00
C 07 F 7/02
C 07 F 7/08
C 07 F 7/10
C 07 F 7/18

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-01-1981 | PHILLIPS |

EPA form 1503.1 06.78